## Europäisches Patentamt
## European Patent Office
## Office européen des brevets

(19)

(11) Veröffentlichungsnummer: **0 134 993**
**B1**

(12) # EUROPÄISCHE PATENTSCHRIFT

(45) Veröffentlichungstag der Patentschrift:
14.10.87

(21) Anmeldenummer: **84108065.8**

(22) Anmeldetag: **10.07.84**

(51) Int. Cl.⁴: **G 11 B 5/702**

(54) Verfahren zur Herstellung von magnetischen Aufzeichnungsträgern.

(30) Priorität: **15.07.83 DE 3325555**

(43) Veröffentlichungstag der Anmeldung:
**27.03.85 Patentblatt 85/13**

(45) Bekanntmachung des Hinweises auf die Patenterteilung:
**14.10.87 Patentblatt 87/42**

(84) Benannte Vertragsstaaten:
**DE FR GB NL**

(56) Entgegenhaltungen:
**CH-A-417 689**
**DE-A-2 222 799**
**DE-A-2 533 850**
**DE-A-3 208 865**
**GB-A-2 108 973**

**Nevell u. Zeronian "Cellulose Chemistry and its Applications", Ellis Horwood Ltd., GB,1985, Seite 203**
**Firmenschrift der Firma Wolff Walsrode AG, 3030 Walsrode, DE,"Walsroder Collodiumwolle", 1970, Seiten 67-71, 102, 103**

(73) Patentinhaber: **BASF Aktiengesellschaft, Carl- Bosch- Strasse 38, D-6700 Ludwigshafen (DE)**

(72) Erfinder: **Lehner, August, Wachenheimer Strasse 4, D-6701 Roedersheim- Gronau (DE)**
Erfinder: **Hack, Joachim, Pfarrer- Friedrich- Strasse 34, D-6700 Ludwigshafen (DE)**
Erfinder: **Krucker, Karl, Dr., Frankenstrasse 36, D-6710 Frankenthal (DE)**
Erfinder: **Balz, Werner, Dr., Kropsburgstrasse 44, D-6703 Limburgerhof (DE)**
Erfinder: **Roemer, Karl Heinz, Albrecht- Duerer- Ring 14, D-6710 Frankenthal (DE)**
Erfinder: **Rudolf, Peter, Buchenweg 1, D-6701 Fussgoenheim (DE)**
Erfinder: **Falk, Roland, Dr., Hohbuehl 51, D-7590 Achern (DE)**
Erfinder: **Eckert, Guenter, Dr., Flossbachstrasse 1, D-6703 Limburgerhof (DE)**

EP 0 134 993 B1

## Beschreibung

Die Erfindung betrifft ein Verfahren zur Herstellung von magnetischen Aufzeichnungsträgern mit geringer Magnetschichtdicke durch Dispergieren von feinteiligem magnetisch anisotropen Material und üblichen Zusatzstoffen in einer Lösung eines Polymerbindemittels in einem organischen Lösungsmittel, schichtförmiges Auftragen der Dispersion auf ein nichtmagnetisierbares Trägermaterial mittels eines Messergießers, gegebenenfalls anschließendes Ausrichten des magnetisch anisotropen Materials durch ein Magnetfeld und Trocknen der aufgebrachten Schicht.

Es ist bekannt magnetische Aufzeichnungsträger durch Beschichten von nichtmagnetisierbaren Trägermaterialien mit einer Dispersion eines magnetischen Materials in einem gelösten Polymerbindemittel und anschließendes Verfestigen der Schicht herzustellen. Die Beschichtung erfolgt in üblicher Weise mittels eines Messergießers oder dem Reverse-Roll-Coating-Verfahren auf eine kontinuierlich geführte Folienbahn. Dabei wird die Beschichtungsschichtstärke in Abhängigkeit von der gewünschten Magnetschichtstärke unter Berücksichtigung des Schrumpfens der Dispersionsschicht beim Trocknen (Schrumpffaktor) eingestellt.

Die Entwicklung zu immer höheren Aufzeichnungsdichten bei magnetischen Aufzeichnungsträger, insbesondere bei ihrer Verwendung als Datenträger, macht die Ausbildung von sehr dünnen magnetischen Schichten mit dennoch hohen magnetischen Kenndaten erforderlich, die weitgehend schwankungsfrei über lange Strecken beibehalten werden. Dies bedeutet, daß die Magnetschicht sehr gleichmäßig und ohne Dickenschwankungen verteilt sein muß. Die gebildete Magnetschicht muß außerdem eine gute Haftfestigkeit auf dem Trägermaterial aufweisen und gegen Lösungsmittel, Temperaturunterschiede, Feuchtigkeit sowie gegen Abrieb sehr beständig sein. Dies erfordert eine harte aber jedoch nicht spröde Schicht.

Die für die Herstellung der Schicht vorhandenen Bindemittel bestimmen somit in hohem Maße deren mechanische Eigenschaften.

Als Bindemittel für die Dispersion des feinteiligen magnetischen Materials sind bereits viele Polymere und Mischungen von verschiedenen Polymeren empfohlen worden. Bekannt ist z. B. die Verwendung von Polyacrylaten, Polyamiden, Cellulosenitraten, Polyestern, Polyurethanen, Phenoxyharzen, Mischpolymerisaten aus Vinylchlorid/Acrylnitril und Copolymerisaten aus Vinylchlorid, Vinylacetat und Vinylalkohol. Der größte Teil der aufgeführten Polymeren ist relativ hart und spröde. Die übliche mechanische Beanspruchung der Magnetschicht erfordert jedoch eine elastische, oftmals weichere Einstellung. Daher werden häufig Polyurethanelastomere mit relativ spröden Polymeren, wie Phenoxiharzen, Vinylchlorid-Vinylacetat-Copolymeren, Polycarbonat u.a. kombiniert oder aber Weichmacher in die Schicht eingebracht.

Es hat sich jedoch gezeigt, daß mit den bekannten und üblicherweise verwendeten Bindemitteln keine gleichmäßigen und nur geringe Dickenschwankungen aufweisenden Magnetschichten mit sehr geringer Schichtstärke, insbesondere solche mit einer Schichtdicke um 1 μm, herstellbar sind. Dies gilt vor allem beim Auftragen der Dispersion auf das Trägermaterial mit Hilfe des Messergießers. Die äußerst geringe Trockenschichtdicke erfordert bei üblichem Schrumpfen der lösungsmittelhaltigen Dispersionsschicht beim Trocknen bereits schon eine geringe Beschichtungsschichtstärke der Dispersionsschicht. Daraus ergeben sich leicht Benetzungsstörungen und Gießstreifen bei der Beschichtung des Trägermaterials mit zu geringem Gießspalt.

Wird dagegen durch Verdünnen der gießfähigen Dispersion mit Lösungsmittel der sogenannte Schrumpffaktor vergrößert, so entstehen Nachteile dadurch, daß die Viskosität sehr stark abfüllt und damit der Vorgang des Auftrags der Dispersion auf das Trägermaterial außer Kontrolle gerät. Außerdem wird die Dispersion durch einen zu großen Lösungsmittelanteil meist instabil.

Aufgabe der vorliegenden Erfindung war es daher ein Verfahren bereitzustellen, mit dem sich magnetische Aufzeichnungsträger mit besonders geringer Schichtstärke der Magnetschicht durch Auftragen einer Dispersion von feinteiligem magnetischen Material in Lösungen von Polymerbindemitteln mit Hilfe eines Messergießers auf das Trägermaterial ohne die vorgenannten Nachteile herstellen lassen. Zudem muß die Magnetschicht trotz ihrer geringen Schichtstärke außerordentlich homogen und auch mechanisch stabil sein. Die magnetischen Eigenschaften dieser sehr dünnen Schichten müssen den Anforderungen, die durch die moderne Aufzeichnungstechnik gestellt werden, gerecht werden.

Es wurde nun gefunden, daß sich magnetische Aufzeichnungsträger aufgabengemäß mit einer Magnetschichtstärke von kleiner 3,5 μm durch schichtförmiges Auftregen einer Dispersion mit einem Schrumpffaktor von größer 10, erhalten durch gleichmäßiges Verteilen eines magnetisch anisotropen Materials und üblichen Zusatzstoffen in einer Lösung eines Polymerbindelmittels in einem organischen Lösungsmittel, auf ein nichtmagnetisierbares Trägermaterial mittels eines Messergießers, gegebenenfalls anschließendes Ausrichten des magnetisch anisotropen Materials durch ein Magnetfeld und Trochnen der aufgebrachten Schicht herstellen lassen, wenn die Dispersion bei einem Verhältnis von magnetischem Material zu organischem Lösungsmittel von mindestens 1 : 4,5 neben dem Polymerbindemittel 3 bis 30 Gew.-%. bezogen auf den Anteil des Polymerbindemittels. Nitrocellulose oder deren hochmolekulare Umsetzungsprodukte mit einem K-Wert von größer 75 enthält, so daß die Viskosität zwischen 50 und 400 mPa.s beträgt.

Die hierfür geeignete Nitrocellulose oder deren hochmolekulere Umsetzungsprodukte, wie mit Di- oder Polyisocyanaten umgesetzte Celluloseacetobutyrate, Celluloseacetate, Cellulosepropionate weisen einen K-Wert von größer 75, insbesondere größer 90 und bevorzugt zwischen 100 und 200 auf. Bei der Reaktion mit den Di- und/oder Polyisocyanaten erfolgt die Molekülvergrößerung durch Querverbindungen über die OH-Gruppen der Cellulosemoleküle.

Die entsprechend dem erfindungsgemäßen Verfahren der Dispersion zugesetzten Verbindungen kommen in der angegebenen Menge, vorzugsweise in einer Menge von 5 bis 20 Gew.%, bezogen auf den Anteil des Polymerbindemittels in der Dispersion, zur Anwendung.

Die Zusammensetzung und Herstellung der Dispersion der magnetischen Materialien im Polymerbindemittel entspricht den an sich üblichen Verfahren.

Als magnetische Materialien können die an sich bekannten verwendet werden. Geeignet sind Gamma-Eisen (III)-oxid, feinteiliger Magnetit, ferromagnetisches undotiertes oder dotiertes Chromdioxid, kobaltdotiertes Gamma-Eisen-(III)-oxid sowie ferromagnetische Metall- und Metalllegierungspulver, vorwiegend aus Eisen und Kobalt bestehend. Bevorzugte Materialien sind nadelförmiges Gamma-Eisen-(III)-oxid sowie ferromagnetisches Chromdioxid. Die Teilchenlänge beträgt im allgemeinen 0,2 bis 2 μm, bevorzugt 0,3 bis 0,8 μm.

Die Bindemittel werden ebenfalls aus den an sich für die Herstellung von magnetischen Aufzeichnungsträger bekannten ausgewählt. Dies sind ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60 % an Vinylchlorid-Molekülbausteinen, z. B. ein Vinylchloridcopolymerisat mit einem oder mehreren Comonomeren, die ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomeren oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und Vinylchlorid-Copolymerisaten der oben angegebenen Zusammensetzung. Bevorzugte Bindemittel sind Polyurethanelastomere mit einem K-Wert (1 % in DMF) bis 75, wie sie u.a. in den DE-ASen 11 06 955 und 27 53 694 und der DE-OS 24 42 762 beschrieben sind, ebenso wie Polyvinylformal-Binder, die in bekannter Weise durch Hydrolyse eines Polymerisates eines Vinylesters und ausschließende Umsetzung des Vinylalkohol-Polymeren mit Formaldehyd hergestellt werden. Sie haben zweckmäßig einen Vinylformalgruppengehalt von mindestens 65 Gew.% und insbesondere mindestens 80 Gew.%. Recht geeignete Polyvinylformale haben einen Gehalt an Vinylalkohol-Gruppen von 5 bis 13 Gew.%, einen Gehalt an Vinylacetat-Gruppen von 7 bis 15 Gew.%, einen Gehalt an Vinylformal-Gruppen von 80 bis 88 Gew.%, ein spezifisches Gewicht von ca. 1,2 und einen K-Wert (1 % in DMF) von 60 ± 5. In gleicher Weise sind auch Mischungen, insbesondere der beiden letztgenannten Bindemittel sehr gut geeignet.

Als Lösungsmittel für die Herstellung und Verarbeitung der Polymeren werden vorzugsweise cyclische Ether, wie Tetrahydrofuran und Dioxan und Ketone, wie Methylethylketon, Cyclohexanon, verwendet. Selbsverständlich können die Polyurethane auch in anderen stark polaren Lösungsmitteln, wie Dimethylformamid, Pyrrolidon, Dimethylsulfoxid oder Ethylenglykolacetat gelöst werden. Ebenso ist es möglich, die genannten Lösungsmittel mit Aromaten, wie Toluol oder Xylol und Estern, wie Ethyl- oder Butylacetat, zu mischen.

In an sich bekannter Weise können die Magnetschichten ferner in kleinen Mengen Zusätze wie Dispergiermittel und/oder Gleitmittel, aber auch Füllstoffe enthalten, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gewichtsprozent, bezogen auf die Magnetschicht.

Als nichtmagnetische und nichtmagnetisierbare Träger lassen sich die üblichen Trägermaterialien verwenden, insbesondere Folien aus linearem Polyester, wie Polyethylenterephthalat, im allgemeinen in Stärken von 4 bis 200 μm und insbesondere von 7 bis 36 μm. Auch Papierträgern, die für Zwecke der mittleren Datentechnik eingesetzt werden lassen sich verwenden.

Die Herstellung der magnetischen Aufzeichnungsträger erfolgt in bekannter Weise. Zweckmäßigerweise wird die in einer Dispergiermaschine, z. B. einer Topfkugelmühle oder einer Rührwerksmühle, aus dem magnetischen Material und einer Lösung des bzw. der Bindemittel unter Zusatz von Dispergiermitteln und anderen Zusätzen hergestellte Magnetdispersion filtriert und mittels eines Messer- bzw. Linealgießers, auf den nichtmagnetischen Träger aufgetragen und getrocknet. Beim Dispergieren ist es von Vorteil das magnetische Material mit einem Teil des Bindemittels, des Lösungsmittels und den Dispergierhilfsmitteln vorzudispergieren und dann erst mit dem Rest des Bindemittels und der hochmolekularen organischen Verbindung aufzustocken.

Durch Zumischen von Polyisocyanat, vorzugsweise von Di- oder Triisocyanaten, wie 4,4'-Diisocyanato-diphenylmethan oder einem Triisocyanat aus 3 Mol eines Diisocyanats, wie Toluylendiisocyanat oder 4,4'-Diisocyanato-diphenylmethan und 1 Mol eines Triols, wie Glycerin oder 1,1,1-Trimethyl-olpropan, insbesondere dem Reaktionsprodukt aus 3 Mol Toluylendiisocyanat und 1 Mol 1,1,1-Trimethylolpropan, bevorzugt zur fertigen Magnetdispersion vor dem Auftragen auf den Träger, können die mechansichen Eigenschaften der erfindungsgemäß hergestellten Magnetschichten bei Verringerung der Thermoplastizität in ihrer Abriebfestigkeit noch weiter verbessert werden. Die Menge der dafür zugesetzten Polyisocyanate beträgt im allgemeinen etwa 1 bis 25 Gewichtsprozent, bezogen auf die Gesamtmenge des Bindemittels.

Werden Bindemittel oder Bindemittelmischungen verwendet, denen vor dem oder beim Auftragen der Magnetdispersion auf die Träger noch reaktive Polyisocyanate zugesetzt wurden, so hat gegebenenfalls eine Temperung der Magnetschicht Vorteile in bezug auf den Dauerlauf. Die Vernetzungsreaktion wird zweckmäßigerweise durch den Zusatz von Katalysatoren beschleunigt. Beispielsweise durch Zusatz tertiärer Amine, wie Triethylamin, Triethylendiamin, N-Methyl-pyridin und N-Methyl-morpholin, Metallsalze, wie Kaliumacetat und Zinkstearat und organische Metallverbindungen, wie Dibutylzinndilaurat. Die beschichteten Folien werden dann auf üblichen Maschinen durch Hindurchführen zwischen geheizten und polierten Walzen, gegebenenfalls bei Anwendung von Druck und Temperaturen von 50 bis 100°C, vorzugsweise 60 bis 80°C, geglättet und verdichtet. Die Dicke der Magnetschicht ist kleiner 3,5 μm und beträgt vorzugsweise 0,7 bis 1,5 μm. Im Falle der Herstellung von flexiblen Magnetbändern werden die beschichteten Folien in der Längsrichtung in den üblichen, meist nach Zoll festgelegten Breiten geschnitten. Im Falle von flexiblen Disk werden diese aus den Folienbahnen ausgestanzt.

Mit dem erfindungsgemäßen Verfahren wird die Herstellung dünner gleichmäßiger Magnetschichten mit etwa 1 μm Schichtstärke und mit dennoch geringen Schichtdickenschwankungen ermöglicht. Es hat sich gezeigt, daß Dispersionen, die hierbei eine Viskosität von 50 bis 400 mPa.s, bevorzugt 80 bis 200 mPa.s bei einer Fließgrenze von 5 bis 40 Pa, bevorzugt 8 bis 25 Pa, aufweisen, besonders geeignet sind und dabei das Oxid/Lösungsmittel-Verhältnis mindestens 1:4,5 beträgt. Sehr vorteilhaft sind Oxid/Lösungsmittel-Verhältnisse, die oberhalb von 1:5,5 oder sogar 1:6,5 liegen und bis zu einer Obergrenze von 1:10 reichen können. Wenn bei der konventionellen Herstellung von Magnetschichten durch die Beschichtung des flexiblen Trägermaterials mittels des Messergießers Schrumpffaktoren, das ist das Verhältnis von Spalthöhe des Messergießers zu Trockendicke der Magnetschicht, kleiner 10 möglich und auch für die Herstellung üblicher Aufzeichnungsträger ausreichend sind, so wird mit Hilfe des erfindungsgemäßen Verfahrens ein Schrumpffaktor von größer 10, vorzugsweise 15 bis 25 erhalten. Voraussetzung für dieses Verhalten ist eine ausgeprägte Strukturviskosität der Magnetdispersion. So wird durch das thixotrope Fließverhalten bewirkt, daß sich die Dispersion unter Scherbeanspruchung, wie sie unmittelbar beim Gießen, auftritt, leicht verarbeiten läßt um dann nach dem Auftrag auf das Trägermaterial schnell wieder eine hohe Viskosität aufzubauen. Daraus ergibt sich auch ein sehr guter Verlauf der Dispersion am Gießer und damit eine ausgeprägte Homogenität der Schicht und welche dann nach dem Ansteigen der Viskosität beibehalten wird.

Die erfindungsgemäß aufgebauten Dispersionen sind somit trotz ihres hohen Lösungsmittelanteils stabil und gut filtrierbar. Sie lassen sich leicht verarbeiten, ohne daß Gießstreifen auftreten.

Diese nach dem erfindungsgemäßen Verfahren hergestellten magnetischen Aufzeichnungsträger besitzen gegenüber solchen, welche ohne die genannten hochmolekularen organischen Verbindungen nach dem Stand der Technik hergestellt wurden, trotz der sehr geringen und nur mit minimalen Dickenschwankungen behafteten Schichtstärke eine verbesserte Homogenität der Magnetschicht und aufgrund dieser sowohl gleichmäßigen wie auch homogenen Magnetschicht ein deutlich verringertes Fehlerniveau bezüglich drop-out- und drop-in-Fehlern hervorgerufen durch Gießstreifen und ein günstiges peak-shift-Verhalten. Ein weiterer Vorteil dieser homogenen Magnetschichtoberflächen ergibt sich in der geringeren Modulation.

Die Erfindung sei anhand folgender Beispiele im Vergleich zu einem Versuch nach dem Stand der Technik näher erläutert. Die in den Beispielen und dem Vergleichsversuch genannten Teile und Prozente beziehen sich, soweit nicht anders angegeben ist, auf das Gewicht.

## Beispiel A

In einem Rührkolben wurden bei 55°C 85 Teile eines Celluloseacetobutyrats mit 37 % Butyrat-, 13 % Acetat- und 2 % Hydroxylgruppen mit einem K-Wert von 60 (gemessen 1 %ig in DMF) in 1050 Teilen wasserfreiem Tetrahydrofuran gelöst und unter Rühren mit 3,75 Teilen Diphenylmethandiisocyanat und 0,9 Teilen Dibutylzinndilaurat versetzt. Nach 5 Stunden ließ sich kein freies NCO mehr nachweisen. Diese als Komponente A bezeichnete Lösung hatte eine Viskosität von 420 mPa.s (gemessen bei 23°C) und einen K-Wert von 91.

## Beispiel 1

In einem Rührkessel von 60 Volumenteilen wurde eine Lösung aus 28 Teilen eines Polyurethanelastomeren mit einem mittleren Molekulargewicht von 100.000 und einem K-Wert von 65, hergestellt auf der Basis eines Polyesterdiols (aus Adipinsäure und Butandiol-1,4) mit einem Molekulargewicht von 1000, Butandiol-1,4, Trimethylolpropan und Diphenylmethandiisocyanat, 7 Teilen eines Phenoxyharzes auf der Basis von Biphenol A und Epichlorhydrin mit 6 % sekundären Hydroxylgruppen in 211,5 Teilen Tetrahydrofuran und 453,5 Teilen Dioxan mit 6,5 Teilen Ruß, 4 Teilen eines $\alpha$-Fe$_2$O$_3$ mit einer mittleren Teilchengröße von 0,3 µm und 108,5 Teilen eines nadelförmigen Gamma-Eisen(III)oxids mit einer Koerzitivfeldstärke von 50 kA/m und einer mittleren Teilchenlänge von 0,5 µm vermischt. Dieser Ansatz wurde dann in einer Rührwerkskugelmühle dispergiert, mit 8 Teilen der Komponente A versetzt und nochmals dispergiert.

Dieser Dispersion wurden dann unmittelbar vor dem Beschichten 16 Teile eines Polyisocyanats aus drei Mol Toluylendiisocyanat und einem Mol Trimethylolpropan zugesetzt.

Die auf diese Weise hergestellte Dispersion hatte eine Viskosität von 100 mPa.s und eine Fließgrenze von 12 Pa.

Anschließend wurde die Dispersion mit einem Messergießer auf eine Polyethylenterephthalatfolie von 12 µm Dicke in einer Stärke von 15 µm aufgetragen. Nach dem Trocknen betrug die Schichtdicke 1,0 µm. Der Schrumpffaktor betrug somit 15.

## Vergleichsversuch 1

In gleicher Weise wie in Beispiel 1 beschrieben wurde aus 52 Teilen eines ähnlich dem in Beispiel 1 aufgebauten Polyurethanelastomeren mit einem K-Wert von 70, 13 Teilen des Phenoxyharzes gemäß Beispiel 1, 195 Teilen Tetrahydrofuran, 456 Teilen Dioxan, 10 Teilen Ruß, 6 Teilen $\alpha$-Fe$_2$O$_3$ 164,5 Teilen des in Beispiel 1 ebenfalls eingesetzten Gamma-Eisen(III)oxids und unter späterem Zusatz von 23 Teilen desgleichen Polyisocyanat eine gießfertige Dispersion hergestellt. Die Viskosität betrug 120 mPa.s und die Fließgrenze lag bei 12 Pa.

Obwohl die rheologischen Eigenschaften ähnlich denen der Dispersion gemäß Beispiel 1 waren, mußte eine Gießspalte von nur 10 µm eingehalten werden um eine Magnetschichtstärke von 1,3 µm zu erzielen (Schrumpffaktor 7,7). Außerdem konnte keine Gußlinien-freie Magnetschicht erhalten werden.

## Beispiel 2

Es wurde wie in Beispiel 1 beschrieben verfahren, jedoch wurde anstelle der Komponente A die gleiche Menge einer Nitrocellulose mit einem K-Wert von 110 eingesetzt. Die gießfertige Dispersion hatte eine Viskosität von 110 mPa.s und eine Fließgrenze von 13 Pa. Eine homogene Magnetschicht mit einer Dicke von 1,0 µm zu erhalten war nur eine Gießspalt von 17 µm erforderlich; der Schrumpffaktor betrug somit 17.

## Beispiel 3

Es wurde in Beispiel 2 beschrieben verfahren, jedoch wurde eine Nitrocellulose mit einem K-Wert von 90 eingesetzt. Bei einem Schrumpffaktor von 15 konnten homogene 1 µm dicke Schichten hergestellt werden.

## Beispiel 4

Es wurde wie in Beispiel 2 beschrieben verfahren, jedoch wurde eine Nitrocellulose mit einem K-Wert von 120 eingesetzt. Bei einem Schrumpffaktor von 20 konnten einwandrreie 1,0 µm dicke Schichten hergestellt werden.

## Patentansprüche

1. Verfahren zur Herstellung von magnetischen Aufzeichnungsträgern mit einer Magnetschichtstärke von kleiner 3,5 µm durch schichtförmiges Auftragen einer Dispersion mit einem Schrumpffaktor von größer 10, erhalten durch gleichmäßiges Verteilen eines magentisch anisotropen Materials und üblichen Zusatzstoffen in einer Lösung eines Polymerbindemittels in einem organischen Lösungsmittel, auf ein nichtmagnetisierbares Trägermaterial mittels eines Messergießers, gegebenenfalls anschließendes Ausrichten des magnetisch anisotropen Materials durch ein Magnetfeld und Trocknen der aufgebrachten Schicht, dadurch gekennzeichnet, daß die Dispersion bei einem Verhältnis von magnetischem Material zu organischem Lösungsmittel von mindestens 1 : 4,5 neben dem Polymerbindemittel 3 bis 30 Gew.-%. bezogen auf den Anteil des Polymerbindemittels, Nitrocellulose oder deren hochmolekulare Umsetzungsprodukte mit einem K-Wert von größer 75 enthält so daß die Viskosität zwischen 50 und 400 mPa.s beträgt.

2. Verfahren gemäß Anspruch 1, dadurch gekennzeichnet, daß das Verhältnis von magnetischem Material zu organischem Lösungsmittel 1 : 4,5 bis 1 : 10 beträgt.

3. Verfahren gemäß einem der Ansprüche 1 oder 2 dadurch gekennzeichnet, daß die Viskosität 80 bis 200 mPa.s beträgt.

4. Verfahren gemäß einem der Ansprüche 1 bis 3, dadurch gekennzeichnet, daß das hochmolekulare Umsetzungsprodukt durch Reaktion mit Di- oder Polyisocyanaten entsteht.

## Claims

1. A process for the production of a magnetic recording medium with a magnetic coating having a thickness of less than 3,5 µm by applying a layer of a dispersion having a shrinkage factor greater than 10, obtained by uniformly dispersing a magnetically anisotropic material and conventional additives in a solution of a polymeric binder in an organic solvent, to a non-magnetizable base by means of a knife coater, then, if desired, orienting the magnetically anisotropic material by means of a magnetic field and drying the applied layer, wherein the dispersion, at a ratio of magnetic material to organic solvent of at least 1:4.5, contains, in addition to the polymeric binder, from 3 to 30 % by weight, based on the amount of polymeric binder, of nitrocellulose or a high molecular weight reaction product thereof having a K value greater than 75, so that the viscosity is from 50 to 400 mPa.s.

2. A process as claimed in claim 1, wherein the ratio of magnetic material to organic solvent is from 1:4,5 to 1:10.

3. A process as claimed in claim 1 or 2, wherein the viscosity is from 80 to 200 mPa.s.

4. A process as claimed in any of claims 1 to 3, wherein the high molecular weight reaction product is formed by reacting nitrocellulose with a diisocyanate or polyisocyanate.

## Revendications

1. Procédé de fabrication de supports d'enregistrement magnétique d'une épaisseur de couche magnétique inférieure à 3,5 µm, par dépôt, sous forme de couche, d'une dispersion à facteur de retrait supérieur à 10, obtenue par répartition uniforme d'un matériau anisotrope magnétique et des additifs usuels dans une solution d'un liant polymère dans un solvant organique, sur un matériau support non magnétisable, au moyen d'une coulée à la racle, éventuellement alignement ensuite de la matière anisotrope magnétique par un champs magnétique, puis séchage de la couche, caractérisé par le fait que le dispersion, avec un rapport de matière magnétisable au solvant organique de moins de 1/4,5 contient, outre le liant polymère, 3 à 30 % en poids, rapporté à le partie de liant polymère, de nitrocellulose, ou de ses produits de réaction à poids moléculaire élevé, d'un indice K supérieur à 75, de manière que la viscosité soit comprise entre 50 et 400 mPa.s.

2. Procédé selon la revendication 1, caractérisé par le fait que le rapport entre matière magnétisable et solvant organique est compris entre 1/4,5 et 1/10.

3. Procédé selon l'une des revendications 1 ou 2, caractérisé par le fait que le viscosité est comprise entre 80 et 200 mPa.s.

4. Procédé selon l'une des revendications 1 à 3, caractérisé par le fait que le produit de réaction à poids moléculaire élevé est obtenu par réaction avec des di- ou polyisocyanates.